# EUROPEAN PATENT SPECIFICATION

(11) **EP 0 961 193 B1**
(45) Date of publication and mention of the grant of the patent: **01.09.2010**
(21) Application number: 99201705.3
(22) Date of filing: 28.05.1999
(51) Int. Cl.: G06F 21/00

(54) **Secure computing device**
Sichere Rechnervorrichtung
Dispositif ordinateur sécurisé

(30) Priority: 29.05.1998 US 87229; 29.05.1998 US 87195; 29.05.1998 US 87262; 29.05.1998 US 87230 P
(43) Date of publication of application: 01.12.1999
(73) Proprietor: Texas Instruments Incorporated, Dallas, Texas 75251 (US)
(72) Inventor: Laczko Sr., Frank L., Allen, Collin County, Texas (US)
(74) Representative: Holt, Michael

(56) References cited:
- EP-A- 0 816 970
- WO-A-98/09209
- US-A- 4 278 837
- US-A- 4 453 230
- US-A- 5 224 160
- US-A- 5 421 006
- US-A- 5 643 086
- US-A- 5 666 411
- US-A- 5 740 413
- PATENT ABSTRACTS OF JAPAN vol. 1997, no. 11, 28 November 1997 (1997-11-28) & JP 09 198316 A (TOSHIBA CORP; TOSHIBA INF SYST JAPAN CORP), 31 July 1997 (1997-07-31) & US 5 826 007 A (SAKAKI ET AL) 20 October 1998 (1998-10-20)

## Description

### TECHNICAL FIELD OF THE INVENTION

The technical field of this invention is secure computing systems, especially computer systems that may execute after manufacture field provided programs secured to prevent the user from unauthorized use of selected computer services. The computer system may also be functionally reprogrammable in a secure manner.

### BACKGROUND OF THE INVENTION

There are currently many methods to deliver video programming to a user's television besides over the air broadcast. Numerous service providers are available to supply this programming to television viewers. Most of these service providers vend a hierarchy of services. Typically there is a basic service for a basic fee and additional services available for an additional fee. The basic services typically include the broadcast network programming, cable superstations, music and sports programming. These basic services are typically supported by advertizing. These basic programming services thus operate on the same economics as over the air broadcast television. The additional services typically include the so called "premium" programming such as sports and movies. These premium programming services are typically not advertizer supported. These are perceived by the television user as higher value services and television users are willing to pay their service providers additional fees for these services. The service provider passes much of this additional fee to the content providers as their compensation for supplying the programming. There may be one or several tiers of these premium services made available by the service providers. At the top of this programming hierarchy is pay per view programming. Pay per view programming typically includes music concerts and sporting events perceived as time sensitive and highly valuable by the television users. Pay per view may also include video on demand, where the television user requests a particular movie be supplied. This hierarchy of service exists for all current alternative methods of program delivery including television cable, over the air microwave broadcast and direct satellite television.

Reception of such alternative programming services has required an additional hardware appliance beyond the user provided television receiver since the beginning of cable television. Initially this additional hardware appliance merely translated the frequency of the signal from the transmission frequency to a standard frequency used in broadcast television. Such a standard frequency is receivable by the user provided television receiver. This additional hardware appliance is commonly known as a "set top box" in reference to its typical deployment on top of the television receiver. Current set top boxes handle the hierarchy of security previously described.

In the past these set top boxes have been fixed function machines. This means that the operational capabilities of the set top boxes were fixed upon manufacture and not subject to change once installed. A person intending to compromise the security of such a set top box would need substantial resources to reverse engineer the security protocol. Accordingly, such fixed function set top boxes are considered secure. The future proposals for set top boxes places the security assumption in jeopardy. The set top box currently envisioned for the future would be a more capable machine. These set top boxes are expected to enable plural home entertainment options such as the prior known video programming options, viewing video programming stored on fixed media such as DVD disks, Internet browsing via a telephone or cable modem and playing video games downloaded via the modem or via a video data stream. Enabling the set top box to be programmed after installation greatly complicates security. It would be useful in the art to have a secure way to enable field reprogramming of set top boxes without compromising the hierarchy of video programming security.

US 4 453 230 discloses an associative memory circuit for providing a real address corresponding to an applied virtual address.

### SUMMARY OF THE INVENTION

This invention is a secure computing system and method as set forth in the claims.

A program is stored at predetermined physical address in memory. Relocation of these physical addresses where the program is stored is prevented.

The program is made non-relocatable using a special table look-aside buffer. The table look-aside buffer has a fixed virtual address register and a plurality of writable virtual address registers. Each of these virtual address registers has a comparator and a corresponding physical address register. The physical address register corresponding to the fixed virtual address register is also fixed. The fixed virtual address register and the fixed physical address register encompass the range of addresses where the program is stored. The fixed virtual address register and the fixed physical address register are preferably mask programmable in manufacture via a metal layer.

The fixed virtual address register and the fixed physical address register may be registers ostensibly writable via the instruction set architecture. In this case, attempts to write to these registers do not change their contents. In addition, it is preferable that attempts to write to these registers produce no faults or exceptions. Alternatively, the fixed virtual address register and the fixed physical address register may not be accessible via the instruction set architecture.

### BRIEF DESCRIPTION OF THE DRAWINGS

These and other aspects of this invention are illustrated in the drawings, in which:
Figure 1 is a block diagram of one embodiment of the secure computing system of this invention;
Figure 2 is an example memory map of the boot read only memory of the digital media processor illustrated in Figure 1;
Figure 3 is an example memory map of the nonvolatile memory of the set top box illustrated in Figure 1;
Figure 4 is an example memory map of the read write memory illustrated in Figure 1; and
Figure 5 is a schematic diagram of a translation look aside buffer preventing virtual memory relocation of a certain page of memory of the digital media processor of Figure 1.

### DETAILED DESCRIPTION OF PREFERRED EMBODIMENTS

The set top box of the future will enable home entertainment options such as the known video programming options, viewing video programming stored on fixed media such as digital video disks (DVD), Internet browsing via a telephone or cable modem and playing video games downloaded via the modem or via a video data stream. Such a variety of capability can only be provided by a fully programmable data processor which can receive and run downloaded programs. This opens up a host of security issues. Since much of the utility of the system depends on being able to download various applications, the possibility also exists for an unauthorized application being downloaded. Such an unauthorized application may be deliberately written to compromise the hierarchy of security.

Fully programmable set top boxes are vulnerable to three main types of attacks. An unauthorized application may interact with the operating system, possibly bypassing security. The set top box nonvolatile memory may be replaced with modified resident applications, but with the original operating system. The nonvolatile memory may be replaced with a new operating system. The most important item to protect is the operating system. If the operating system is compromised, an unauthorized person can do almost anything, including disguising the fact that the operating system is compromised.

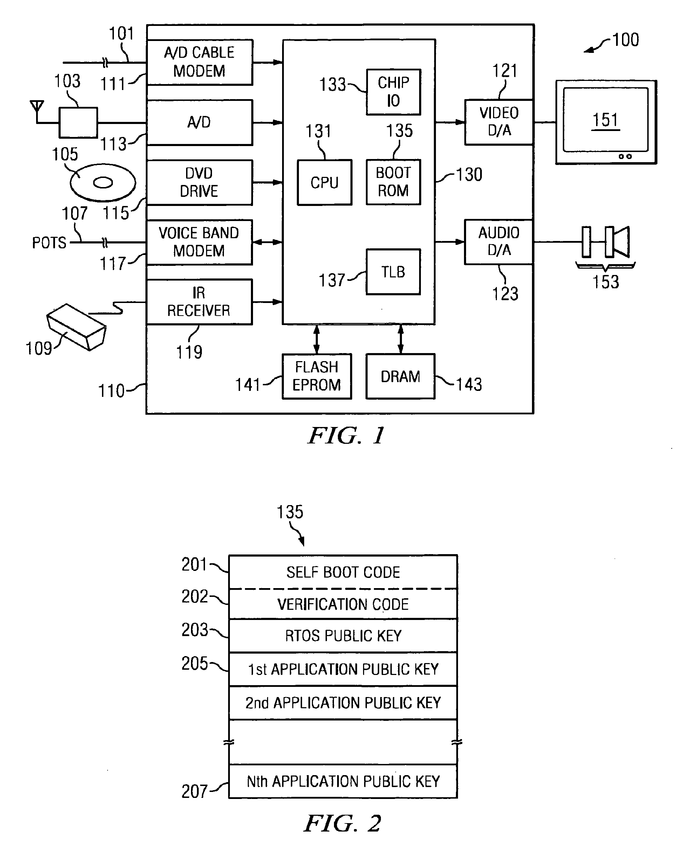

Figure 1 illustrates in schematic form the parts of a versatile, programmable set top box system 100. Set top box system 100 is responsive to inputs from: television cable 101; direct satellite receiver front end 103, digital video disk (DVD) 105; an ordinary telephone line 107; and infrared remote control 109. These inputs are conventional and need not be more fully described here. Any interaction of these conventional inputs with the parts of this invention will be more fully described below.

The central part of set top box system 100 is the set top box 110. Set top box 110 includes various interfaces for the inputs including: video analog-to-digital converter 111 connected to the television cable 101, which may optionally include a cable modem; video analog-to-digital converter 113 connected to direct satellite receiver front end 103; a DVD player capable of receiving and reading DVD 105; voice band modem 117 connected to telephone line 107; and infrared receiver 119 capable of receiving the infrared signals from infrared remote control 109.

Set top box 110 includes several output devices coupled to digital media processor 130. Video digital-to-analog converter 121 receives a video data stream from digital media processor 130 and supplies an corresponding video signal to television receiver 151. Typically the desired video data stream is modulated upon a carrier having a frequency which television receiver 151 can normally receive. It is contemplated that video media processor 130 in cooperation with video digital-to-analog converter 121 will be capable of producing a video signal in a plurality of formats. Upon set up of set top box system 100 the particular format will be selected to correspond to the capability of the particular television receiver 151 employed. Audio digital-to-analog converter 123 receives an audio data stream from digital media processor 130 and supplies a base band audio signal to audio system 153. It is contemplated that this audio signal may encompass plural audio channels (i.e. left and right channels for stereo). It is also contemplated that any particular video source may include plural encoded audio data streams such as alternative languages, descriptive video or other separate audio programs (SAP). Note also that the audio data stream will typically also be modulated on the same carrier as the video signal for reception and demodulation by television receiver 151.

The intelligent part of set top box 110 is digital media processor 130. Digital media processor 130 is preferable embodied in a single integrated circuit. Note that in order for set top box 110 to be fully secure as intended in this invention, central processing unit 131 and boot ROM 135 must be located on the same integrated circuit. Digital media processor 130 includes central processing unit 131. Central processing unit 131 is illustrated generically and is not intended to limit the structure employed. Central processing unit preferably includes data processing capability for control functions required for selection of operating mode, channel tuning, security functions and the like. Central processing unit preferably also includes digital signal processing capability for decompressing compressed video and audio signals, decrypting encrypted video signals, converting the received video to the format of the user's television receiver, operating as a "software" cable modem and voice band modem and demodulating the signal from infrared remote control 109. Central processing unit 131 may include a microprocessor and a digital signal processor, a single data processor capable of all the necessary functions or a multiprocessor. The exact nature of central processing unit, except for details noted below, is not relevant to this invention.

Digital media processor 130 further includes chip identity register 133. Chip identity register 133 is a programmable readable register holding an identity number unique to the integrated circuit embodying digital media processor 130. This identity number is preferably implemented as taught in U.S. Patent Application No. 08/813,887 entitled *Circuits, Systems, and Methods for Uniquely Identifying a Microprocessor* at *the Instruction Set Level* and filed March 7, 1997. As described in this patent application, the unique identification code is formed in a read-only data register by laser probing following integrated circuit test. The unique chip identity number may be specified via selective blowing of fuse or antifuse links or other techniques. This identity number permits a program to verify the exact identity of the particular digital media processor 130 used in the set top box 110.

Digital media processor 130 includes boot read only memory (ROM) 135. Digital media processor 130 is constructed so that central processing unit 131 begins executing program instructions stored within boot ROM upon each initial application of electric power. An exemplary memory map of boot ROM 135 is illustrated in Figure 2. Those skilled in the art will realize that the exact order of storage of the various parts is not as important as the existence of the detailed data types. Boot ROM 135 includes self boot code 201. Self boot code 201 is the program instructions initially executed by central processing unit 131 upon each initial application of electric power to digital media processor 130. In addition the known processes for initializing computer systems, self boot code 201 also includes verification program code 202. Boot ROM 135 also includes a public signature keys. These public signature keys include real time operating system (RTOS) public signature key 203, first application public signature key 205, second application public signature key 207 to the Nth application public signature key 207. These public signature keys are employed in verification of the authorization of programs in a manner that will be further described below.

Digital media processor 130 also includes table look-aside buffer (TLB) 137. Table look-aside buffer 137 is employed to enhance security during virtual memory operation in a manner further described below.

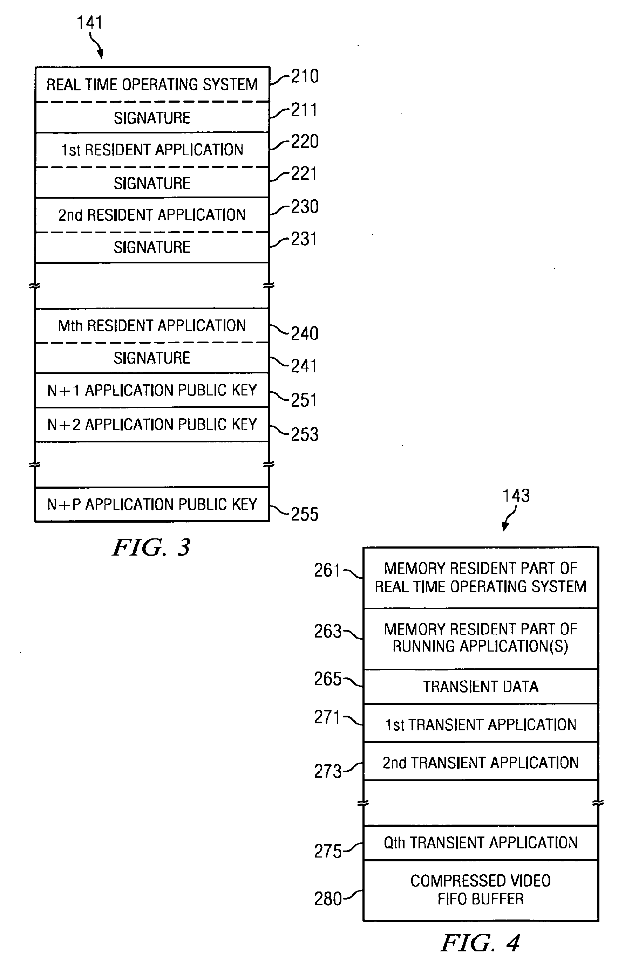

Set top box 110 includes flash (electrically programmable read only memory) EPROM 141 bi-directionally coupled to digital media processor 130. Flash EPROM 141 serves as the nonvolatile memory for set top box system 100. This is known as a nonvolatile memory because it retains its contents when electric power is turned off. Nonvolatile memory is needed for the real time operating system (RTOS) and for resident applications. Figure 3 illustrates an exemplary memory map of flash EPROM 141. Flash EPROM 141 includes the real time operating system (RTOS) 210. RTOS 210 includes program code enabling digital media processor 130 to receive and process various data streams as they are received, i.e. in "real" time. RTOS 210 also enables digital media processor 130 to respond to operator control via infrared remote control 109 and infrared receiver 119. RTOS 210 includes a signature portion 211 whose use will be further described below. Flash EPROM 141 includes program code for the first resident application 220 with its corresponding signature portion 221. Likewise, flash EPROM 141 included program code for the second resident application 230 and its corresponding signature portion 231 and program code for other resident applications to the Mth resident application 240 and its corresponding signature portion 241. Flash EPROM 141 optionally includes additional public keys including N + 1st public key 251, N + 2nd public key 253 to N + Pth public key 255. These additional public signature keys are similar to the N public signature keys stored in boot ROM 135. Their use will be detailed below.

Set top box 110 further includes dynamic random access memory (DRAM) 143 bi-directionally coupled to digital media processor 130. DRAM 143 is a volatile memory that serves as read/write memory to temporarily store transient data during normal operations. DRAM 143 is preferably embodied by synchronous memory employing a RAMBUS interface. Figure 4 illustrates an exemplary memory map of DRAM 143. DRAM 143 stores the memory resident part 261 of the real time operating system. Depending upon the particular status of set top box system 100 this memory resident part 261 of the RTOS may differ as known in the art. DRAM 143 stores the memory resident parts 263 of the currently running application or applications. These applications may be resident applications stored in flash EPROM 141 or transient applications stored in other parts of DRAM 143. Depending upon the status of set top box system 100, there may be various applications running and their immediately accessible parts will be stored in DRAM 143 for faster access than from flash EPROM 141. DRAM 143 also stores transient data 265. This transient data 265 includes temporary data used by the various applications as well as the current control status as controlled by the user via infrared remote control 109 and infrared receiver 119. DRAM 143 stores the program code of various transient applications such as first transient application 271, second transient application 273 to Qth transient application 275. Transient applications are those loaded via cable modem 111, voice band modem 117 or DVD drive 115 that are intended for use only during the current session of set top box system 100. These may include video games, Internet browsing and the like. These transient applications are loaded into DRAM 143 each time they are used and then discarded. DRAM 143 also stores compressed video in a first-in-first-out (FIFO) buffer 280. Video data from television cable 101, direct satellite receiver front end 103 and DVD 105 will generally be transmitted in compressed form. This salves transmission bandwidth and storage space. One of the tasks of digital media processor 130 is to decompress the video data. Current video compression formats (such as MPEG2) and all contemplated future video compression formats are nonlinear. That is, the different portions of the video data stream are compressed to differing degrees. Thus a constant rate of received video data represents varying amounts of video. Following decompression, digital media processor must supply video data in a constant rate to be viewed. Compressed video FIFO buffer 270 is necessary to smooth out the variations in the rate of receipt. This permits the decompression process to neither overflow with too much compressed data nor underflow with no compressed data ready for decompression. This is possible because the compressed video data stream represents a constant rate video data stream that is to be viewed. Thus the overall average compressed video data rate corresponds to the constant real time viewing rate.

This security technique relies upon the security of boot ROM 135. Since boot ROM 135 is located on the same integrated circuit as the other parts of digital media processor 130 and it is a read-only, it is not subject to unauthorized change. Therefore the verification function cannot be changed to verify a unauthorized RTOS. Many of the security functions will be available only to the RTOS based upon program privilege levels. Thus most security functions cannot be easily compromised. The private key used for encryption will only be known to the RTOS supplier, or only to the manufacturer of digital media processor 130. In addition the public key needed to verify the signature or to decrypt the RTOS is also in the boot ROM. This prevents substitution of another public key in an attempt to cause digital media processor 130 to verify an unauthorized RTOS. Additionally, the resident applications are also secure. The private keys for resident applications can be known only by the application owner, or by the service provider who authorizes the application.

The above private key/public key signature verification system will protect against most security attacks. However, if the private key used to authenticate the RTOS is compromised, the security may be defeated by replacing the RTOS with an unauthorized RTOS which will still look authentic.

The simplest way to detect a modified RTOS would be to check the resident RTOS against the authorized program. An application program, such as a diagnostic program, could read certain memory locations in the RTOS to see if they contain the expected values. This may not always reveal unauthorized substitution of another RTOS. Many complex data processors such as would be used to embody digital media processor 130 support virtual memory. In a virtual memory environment, the RTOS is quite capable of virtualising itself. Thus the unauthorized RTOS would intercept the confirming read attempts and return the results that the diagnostic application expects from a copy of the authorized RTOS. However, this unauthorized RTOS would run instead of the original RTOS consequently compromising security. The present inventors propose a technique which assures that an application can access a portion of memory directly without being intercepted and translated to a virtual address by the RTOS.

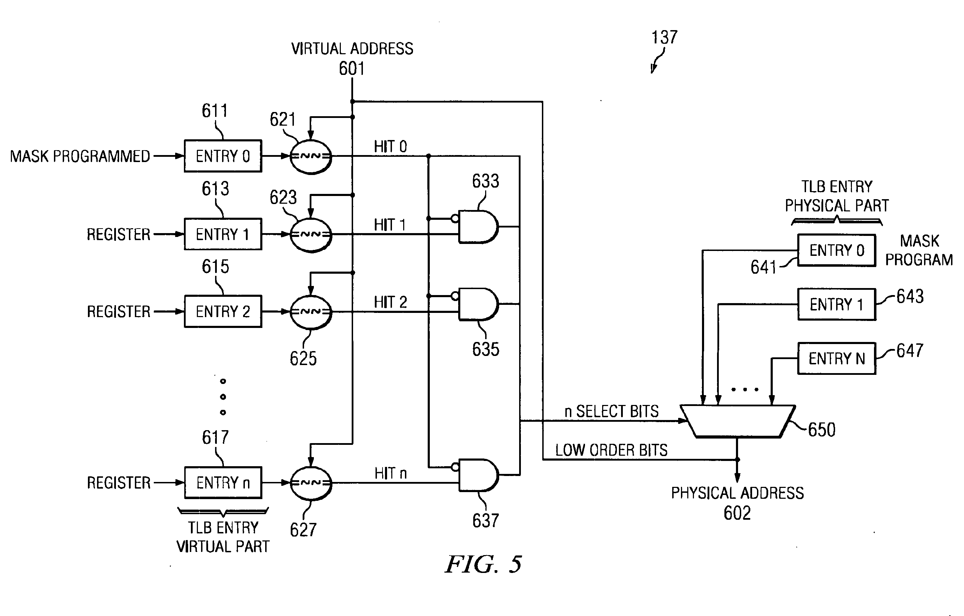

Figure 5 illustrates in block diagram form a translation look-aside buffer (TLB) 137 having a locked page in accordance with this invention. Virtual memory applications translate a virtual address into a physical address. As is known in the art, TLB 137 receives a virtual address on bus 601 and supplies a corresponding physical address on bus 602. A predetermined number of most significant address bits of the virtual address are supplied to a plurality of comparators 621, 623, 625 and 627. The remaining least significant address bits of the virtual address on bus 601 are passed unchanged to the corresponding bits of physical address on bus 620. Each comparator 621, 623, 625 and 627 has a corresponding virtual address register 611, 613, 615 and 617, respectively. The comparators 621, 623, 625 and 627 determine if the predetermined number of most significant bits of the virtual address on bus 601 matches the contents of the respective registers 611, 613, 615 and 617. Each comparator 621, 623, 625 and 627 supplied match indication to multiplexer 650. Multiplexer 650 supplies the predetermined number of most significant bits from one of the physical address registers 641, 643, 645 and 647. The physical address register selected by multiplexer 650 corresponds to the comparator 621, 623, 625 or 627 detecting a match. These most significant physical address bits selected by multiplexer 650 are supplied to the most significant bits of the physical address on bus 602. Thus TLB 137 substitutes a predetermined number of bits of a physical address for the same number of bits of the virtual address. The number of possible substitutions enabled by the virtual address register and its corresponding comparator and physical address register is limited only by considerations of operation code space to access the registers and the amount of space occupied by the TLB. In the prior art, virtual address registers 611, 613, 615 and 617 and physical address registers 641, 643, 645 and 647 are alterable via software. Thus the real time operating system has control of the mapping of virtual addresses to physical addresses.

In this invention one of the virtual address registers and the corresponding physical address register are fixed upon manufacture. In the preferred embodiment, this pair of registers are mask programmable at metal layers, permitting the locked page to be selected upon manufacture of the integrated circuit including TLB 137 but unalterable following manufacture. Figure 5 illustrates a fixed virtual address register 611 and its corresponding fixed physical address register 641. In the preferred embodiment the virtual address stored in fixed virtual address register 621 equals the physical address stored in fixed physical address register 641. In the preferred embodiment, the critical code to be protected from relocation will be stored in flash EPROM 141 within the boundary of physical addresses covered by this virtual address register. Attempts to write to either fixed virtual address register 611 or fixed physical address register 641 will fail because these registers are fixed in hardware. Preferably there will be no faults or errors generated by an attempt to modify these registers. Alternatively, neither the fixed virtual address register 611 nor the fixed physical address register 641 are accessible via the instruction set architecture. Since the reason that fixed virtual address register 611 or fixed physical address register 641 are fixed is to prevent alteration, no access via the instruction set architecture would ever be required.

A further feature of this invention is illustrated in Figure 5. Note that the match indication from comparator 621 is supplied directly to multiplexer 650. The match indication from other comparators form the noninverting input to respective AND gates 633, 635 and 637. Each of these AND gates 633, 635 and 637 receives the match indication from comparator 621 on an inverting input. Thus a match indication from comparator 621 prevents supply of a match indication to multiplexer 650 from any other comparator. This prevents an unauthorized person from leaving the original RTOS in place to respond to security queries while attempting to run an unauthorized RTOS from a relocated part of memory. Any memory accesses to the physical memory addresses of virtual address register 611 and physical address register 641 cannot be relocated but are directed to the physical address of the original RTOS.

With this invention an unauthorized attempt to relocate the RTOS may occur, but no actual address translation will take place. Thus if the original RTOS is always located in this memory area, a diagnostic program can read signature locations with assurance that the original physical locations are being accessed. Thus the diagnostic program can determine if the RTOS is compromised, and take appropriate remedial action. This remedial action may include any of the remedial actions previously described.

## Claims

1. A secure computing system comprising:
a memory (135) storing data and/or instructions at corresponding addresses;
an address generator (131) for generating virtual addresses of a first predetermined number of bits for accessing data and/or instructions in said memory;
a table look-aside buffer (137) connected to said address generator (131) having
a fixed virtual address register (611) of a second predetermined number of bits less than said first predetermined number of bits, said fixed virtual address register (611) storing a first virtual address that is fixed upon manufacture,
a plurality of writeable virtual address registers (613, 615, 617) of said second predetermined number of bits, each of said writeable virtual address registers storing a corresponding second virtual address,
a first comparator (621) connected to said address generator (131) and said fixed virtual address register (611) for comparing said first virtual address stored in said fixed virtual address register (611) with said second predetermined number of bits of said virtual address and indicating a match,
a plurality of second comparators (623, 625, 627), each connected to a corresponding writeable virtual address register (613, 615, 617) and said address generator (131), each for comparing said second virtual address stored in said corresponding virtual writeable address register (613, 615, 617) with said second predetermined number of bits of said virtual address and indicating a match,
a fixed physical address register (641) of said second predetermined number of bits, said fixed physical address register (641) storing a first physical address that is fixed upon manufacture,
a plurality of writeable physical address registers (643, 647) of said second predetermined number of bits, each writeable physical address register (643, 647) storing a second physical address,
a multiplexer (650) connected to said memory, said address generator (131), said first comparator (621), each of said second comparators (623, 625, 627), said fixed physical address register and each of said plurality of writeable physical address registers (643, 647), said multiplexer (650) responsive to a match by one of said comparators (621, 623, 625, 627) to substitute contents of a physical register (641, 643, 647) corresponding to said matching comparator for most significant bits of said virtual address and thereby form a physical address supplied to said memory (135) for memory access.

2. The secure computing system of claim 1, wherein:
said multiplexer (650) is responsive to an indication of a match by said first comparator (621) to substitute contents of said fixed physical register (641) for most significant bits of said virtual address.

3. The secure computing system of claim 1, further comprising:
a plurality of AND gates (633, 635, 637), each having an inverting input connected to said first comparator (621) to receive said indication of a match and an non-inverting input connected to a corresponding one of said second comparators (623, 625, 627), each AND gate (633, 635, 637) having an output connected to said multiplexer (650), whereby an indication of a match by said first comparator (621) prevents transmission of an indication of a match by any of said second comparators (623, 625, 627).

4. The secure computing system of claim 1, wherein:
said fixed virtual address register (611) and said fixed physical address register (641) are mask programmable in manufacture.

5. The secure computing system of claim 1, wherein:
said plurality of writeable virtual address registers (613, 615, 617) and said plurality of writeable physical address registers (643, 647) are writeable upon execution of an instruction by said secure computing system;
said fixed virtual address register (611) and said fixed physical address register (641) are ostensibly writeable upon execution of an instruction by said secure computing system, an attempt to write to either said fixed virtual address register (611) or to said fixed physical address register (641) via said instruction fails to alter contents of said register and generates no error message or fault.

6. A method of preventing virtual address relocation of the physical addresses where a resident program is stored in a computer system comprising the steps of:
storing data and/or instructions at corresponding addresses in a memory (135); and **characterized by**
generating virtual addresses of a first predetermined number of bits for accessing data and/or instructions in said memory (185);
storing a first virtual address that is fixed upon manufacture in a fixed virtual address register (611) of a second predetermined number of bits that is less than said first predetermined number of bits;
storing a corresponding second virtual address in each of a plurality of writeable virtual address registers (613, 615, 617) of said second predetermined number of bits;
comparing in a first comparator (621) said first virtual address stored in said fixed virtual address register (611) with said second predetermined number of bits of said virtual address and indicating a match,
comparing in a plurality of second comparators (623, 625, 627), each of said second virtual addresses stored in the plurality of writeable virtual address register (613, 615, 617) with said second predetermined number of bits of said virtual address and indicating a match;
storing a first physical address that is fixed upon manufacture in a fixed physical address register (641)
storing a plurality of second physical addresses in each of a plurality of writeable physical address registers (643, 647) of said second predetermined number of bits;
in response to match being indicated in one of the comparators (621, 623, 625, 627), substituting the contents of a physical register (641, 643, 647) corresponding to said matching comparator (621, 623, 625, 627) for most significant bits of said virtual address to form a physical address;
supplying the formed physical address to said memory (135) for memory access.

## Patentansprüche

1. Ein sicheres Rechner-System, enthaltend:
einen Speicher (135), der Daten und/oder Anweisungen an entsprechenden Adressen speichert;
einen Adress-Erzeuger (131) zum Erzeugen virtueller Adressen von einer ersten, vorbestimmten Anzahl an Bits, für den Zugriff auf Daten und/oder Anweisungen in genanntem Speicher;
einen Tabellen-Look-Aside-Buffer (137), der mit genanntem Adress-Erzeuger (131) verbunden ist und besitzt
ein Register (611) fester virtueller Adressen von einer zweiten, vorbestimmten Anzahl an Bits, die kleiner ist als die genannte, erste Anzahl an Bits, wobei das genannte Register (611) fester virtueller Adressen eine erste, virtuelle Adresse speichert, die bei der Herstellung festgelegt wird,
eine Mehrzahl von beschreibbaren Registern (613, 615, 617) virtueller Adressen von genannter, vorbestimmter, zweiter Anzahl an Bits, wobei jedes der genannten, beschreibbaren Register virtueller Adressen eine entsprechende, zweite, virtuelle Adresse speichert,
einen ersten Komparator (621), der mit genanntem Adress-Erzeuger (131) und genanntem Register (611) fester virtueller Adressen verbunden ist, um genannte, erste, virtuelle Adresse, die in genanntem Register (611) fester virtueller Adressen gespeichert ist, mit genannter, vorbestimmter Anzahl an Bits der genannten, virtuellen Adresse zu vergleichen, wobei eine Übereinstimmung angegeben wird,
eine Mehrzahl von zweiten Komparatoren (623, 625, 627), jeweils verbunden mit einem entsprechenden, beschreibbaren Register (613, 615, 617) virtueller Adressen und genanntem Adress-Erzeuger (131), jeweils zum Vergleichen der genannten, zweiten, virtuellen Adresse, die im entsprechenden, genannten, beschreibbaren Register virtueller Adressen (613, 615, 617) gespeichert ist, mit der genannten, zweiten, vorbestimmten Anzahl an Bits der genannten, virtuellen Adresse, wobei eine Übereinstimmung angegeben wird,
ein Register (641) fester physikalischer Adressen von genannter, zweiter, vorbestimmter Anzahl an Bits, wobei das genannte Register (641) fester physikalischer Adressen eine erste, physikalische Adresse speichert, die bei der Herstellung festgelegt wird,
eine Mehrzahl von beschreibbaren Registern (643, 647) physikalischer Adressen von genannter, zweiter, vorbestimmter Anzahl an Bits, wobei jedes beschreibbare Register (643, 647) physikalischer Adressen eine zweite, physikalische Adresse speichert,
einen Multiplexierer (650), der verbunden ist mit genanntem Speicher, genanntem Adress-Erzeuger (131), genanntem, erstem Komparator (621), jedem der genannten, zweiten Komparatoren (623, 625, 627), genanntem Register fester physikalischer Adressen und jedem Register aus der genannten Mehrzahl von beschreibbaren Registern (643, 647) physikalischer Adressen, wobei genannter Multiplexierer (650) anspricht auf eine von einem der genannten Komparatoren (621, 623, 625, 627) gefundene Übereinstimmung, um Inhalte eines physikalischen Registers (641, 643, 647), das dem die Übereinstimmung feststellenden Komparator entspricht, durch die höchstwertigen Bits der genannten, virtuellen Adresse zu ersetzen und **dadurch** eine physikalische Adresse zu bilden, die genanntem Speicher (135) für Speicherzugriff bereitgestellt wird.

2. Das sichere Rechner-System nach Anspruch 1, in dem:
der genannte Multiplexierer (650) auf eine Indikation einer Übereinstimmung bei genanntem, erstem Komparator (621) anspricht, um Inhalte des genannten, festen, physikalischen Registers (641) durch höchstwertige Bits der genannten, virtuellen Adresse zu ersetzen.

3. Das sichere Rechner-System nach Anspruch 1, das ferner enthält:
eine Mehrzahl von AND-Gattern (633, 635, 637), wobei jedes davon einen invertierenden Eingang besitzt, der mit genanntem, erstem Komparator (621) verbunden ist, um die genannte Indikation einer Übereinstimmung zu empfangen, und einen nichtinvertierenden Eingang, der mit einem jeweiligen der zweiten Komparatoren (623, 625, 627) verbunden ist, wobei jedes AND-Gatter (633, 635, 637) einen Ausgang besitzt, der mit genanntem Multiplexierer (650) verbunden ist, wodurch eine Indikation einer Übereinstimmung durch genannten, ersten Komparator (621) die Übertragung einer Indikation einer Übereinstimmung durch einen beliebigen der genannten, zweiten Komparatoren (623, 625, 627) verhindert.

4. Das sichere Rechner-System nach Anspruch 1, in dem:
das genannte Register (611) fester virtueller Adressen und das genannte Register (641) fester physikalischer Adressen bei der Herstellung maskenprogrammierbar sind.

5. Das sichere Rechner-System nach Anspruch 1, in dem:
die genannte Mehrzahl von beschreibbaren Registern (613, 615, 617) virtueller Adressen und die genannte Mehrzahl von beschreibbaren Registern (643, 647) physikalischer Adressen bei der Ausführung einer Anweisung durch das genannte, sichere Rechner-System beschreibbar sind;
wobei das genannte Register (611) fester virtueller Adressen und das genannte Register (641) fester physikalischer Adressen scheinbar beim Ausführen einer Anweisung durch das genannte, sichere Rechner-System beschreibbar sind, wobei ein Versuch, über die genannte Anweisung entweder in das genannte Register (611) fester virtueller Adressen oder in das genannte Register (641) fester physikalischer Adressen zu schreiben, das Ändern der Inhalte des genannten Registers unterbindet und keine Fehlerbenachrichtigung oder Störung verursacht.

6. Ein Verfahren zum Verhindern der Verschiebung virtueller Adressen von physikalischen Adressen, bei welchem ein residentes Programm in einem Rechner-System gespeichert ist, das die Schritte enthält:
Speichern von Daten und/oder Anweisungen an entsprechenden Adressen in einem Speicher (135); und **gekennzeichnet ist durch**
Erzeugen virtueller Adressen von einer ersten, vorbestimmten Anzahl an Bits zum Zugreifen auf Daten und/oder Anweisungen in genanntem Speicher (185);
Speichern einer ersten, virtuellen Adresse, die bei der Herstellung festgelegt wird, in einem Register (611) fester virtueller Adressen von einer zweiten, vorbestimmten Anzahl an Bits, die kleiner ist, als genannte, erste, vorbestimmte Anzahl an Bits;
Speichern einer entsprechenden, zweiten, virtuellen Adresse in einem jeden aus einer Mehrzahl von beschreibbaren Registern (613, 615, 617) virtueller Adressen von genannter, zweiter, vorbestimmter Anzahl an Bits;
in einem ersten Komparator (621) erfolgendes Vergleichen der genannten, ersten, virtuellen Adresse, die in genanntem Register (611) fester virtueller Adressen gespeichert ist, mit der genannten, zweiten, vorbestimmten Anzahl an Bits der genannten, virtuellen Adresse, wobei eine Übereinstimmung angegeben wird,
in einer Mehrzahl von zweiten Komparatoren (623, 625, 627) erfolgendes Vergleichen von jeder der genannten, zweiten, virtuellen Adressen, die in der Mehrzahl von beschreibbaren Registern (613, 615, 617) gespeichert sind, mit der genannten, zweiten, vorbestimmten Anzahl an Bits der genannten, virtuellen Adresse, wobei eine Übereinstimmung angegeben wird;
Speichern einer ersten, physikalischen Adresse, die bei der Herstellung festgelegt wird, in einem Register (641) fester physikalischer Adressen,
Speichern einer Mehrzahl von zweiten, physikalischen Adressen in jedem einer Mehrzahl von beschreibbaren Registern (643, 647) physikalischer Adressen von genannter, zweiter, vorbestimmter Anzahl an Bits;
als Reaktion auf eine angegebene Übereinstimmung in einem der Komparatoren (621, 623, 625, 627) erfolgendes Ersetzen der Inhalte eines physikalischen Registers (641, 643, 647), das dem genannten Komparator mit Übereinstimmung entspricht, **durch** die höchstwertigen Bits der genannten, virtuellen Adresse, um eine physikalische Adresse zu bilden;
Bereitstellen der gebildeten, physikalischen Adresse an genannten Speicher (135) für Speicherzugriff.

## Revendications

1. Système informatique sécurisé comprenant :
une mémoire (135) qui stocke des données et / ou des instructions à des adresses correspondantes ;
un générateur d'adresses (131) destiné à générer des adresses virtuelles d'un premier nombre de bits prédéterminé pour accéder aux données et / ou aux instructions dans ladite mémoire ;
une mémoire tampon barème en parallèle (table look-aside buffer) (137) connectée audit générateur d'adresses (131), qui présente un registre d'adresse virtuelle fixée (611) d'un deuxième nombre de bits prédéterminé inférieur audit premier nombre de bits prédéterminé, ledit registre d'adresse virtuelle fixée (611) stockant une première adresse virtuelle qui est fixée au moment de la fabrication ;
une pluralité de registres d'adresses virtuelles inscriptibles (613, 615, 617) dudit deuxième nombre de bits prédéterminé, chacun desdits registres d'adresses virtuelles inscriptibles stockant une deuxième adresse virtuelle correspondante ;
un premier comparateur (621) connecté audit générateur d'adresses (131) et audit registre d'adresse virtuelle fixée (611) destiné à comparer ladite première adresse virtuelle stockée dans ledit registre d'adresse virtuelle fixée (611) avec ledit deuxième nombre de bits prédéterminé de ladite adresse virtuelle et indiquant une correspondance ;
une pluralité de deuxièmes comparateurs (623, 625, 627), chacun d'eux étant connecté à un registre d'adresse virtuelle inscriptible (613, 615, 617) correspondant et audit générateur d'adresses (131), chacun d'eux étant destiné à comparer ladite deuxième adresse virtuelle stockée dans ledit registre d'adresse virtuelle inscriptible (613, 615, 617) correspondant avec ledit deuxième nombre de bits prédéterminé de ladite adresse virtuelle et indiquant une correspondance ;
un registre d'adresse physique fixée (641) dudit deuxième nombre de bits prédéterminé, ledit registre d'adresse physique fixée (641) stockant une première adresse physique qui est fixée au moment de la fabrication ;
une pluralité de registres d'adresses physiques inscriptibles (643, 647) dudit deuxième nombre de bits prédéterminé, chaque registre d'adresse physique inscriptible (643, 647) stockant une deuxième adresse physique ;
un multiplexeur (650) connecté à ladite mémoire, audit générateur d'adresses (131), audit premier comparateur (621), à chacun desdits deuxièmes comparateurs (623, 625, 627), audit registre d'adresse physique fixée et à chacun de ladite pluralité de registres d'adresses physiques inscriptibles (643, 647), ledit multiplexeur (650) répondant à une correspondance par l'un desdits comparateurs (621, 623, 625, 627) de façon à remplacer le contenu d'un registre physique (641, 643, 647) qui correspond audit comparateur correspondant par les bits de poids fort de ladite adresse virtuelle et former de ce fait une adresse physique fournie à ladite mémoire (135) pour un accès mémoire.

2. Système informatique sécurisé selon la revendication 1, dans lequel :
ledit multiplexeur (650) répond à une indication d'une correspondance par ledit premier comparateur (621) de remplacer le contenu dudit registre physique fixé (641) par les bits de poids fort de ladite adresse virtuelle.

3. Système informatique sécurisé selon la revendication 1, comprenant en outre :
une pluralité de portes ET (633, 635, 637), chacune d'elles présentant une entrée inverseuse connectée audit premier comparateur (621) de manière à recevoir ladite indication d'une correspondance et une entrée non inverseuse connectée à l'un correspondant desdits deuxièmes comparateurs (623, 625, 627), chaque porte ET (633, 635, 637) présentant une sortie connectée audit multiplexeur (650), grâce à quoi une indication d'une correspondance par ledit premier comparateur (621) empêche la transmission d'une indication d'une correspondance par n'importe lequel desdits deuxièmes comparateurs (623, 625, 627).

4. Système informatique sécurisé selon la revendication 1, dans lequel :
ledit registre d'adresse virtuelle fixée (611) et ledit registre d'adresse physique fixée (641) sont programmables par masquage au moment de la fabrication.

5. Système informatique sécurisé selon la revendication 1, dans lequel :
ladite pluralité de registres d'adresses virtuelles inscriptibles (613, 615, 617) et ladite pluralité de registres d'adresses physiques inscriptibles (643, 647) sont inscriptibles lors de l'exécution d'une instruction par ledit système informatique sécurisé ;
ledit registre d'adresse virtuelle fixée (611) et ledit registre d'adresse physique fixée (641) sont inscriptibles apparemment lors de l'exécution d'une instruction par ledit système informatique sécurisé, une tentative d'écrire dans ledit registre d'adresse virtuelle fixée (611) ou dans ledit registre d'adresse physique fixée (641) par l'intermédiaire de ladite instruction ne permet pas de modifier le contenu dudit registre et ne génère aucun message d'erreur ou aucune anomalie.

6. Procédé destiné à empêcher une translation d'adresse virtuelle des adresses physiques où un programme résident est stocké dans un système informatique comprenant les étapes consistant à :
stocker des données et / ou des instructions à des adresses correspondantes dans une mémoire (135) ; et **caractérisé par** les étapes consistant à :
générer des adresses virtuelles d'un premier nombre de bits prédéterminé pour accéder aux données et / ou aux instructions dans ladite mémoire (185) ;
stocker une première adresse virtuelle qui est fixée au moment de la fabrication dans un registre d'adresse virtuelle fixée (611) d'un deuxième nombre de bits prédéterminé qui est inférieur audit premier nombre de bits prédéterminé ;
stocker une deuxième adresse virtuelle correspondante dans chacun d'une pluralité de registres d'adresses virtuelles inscriptibles (613, 615, 617) dudit deuxième nombre de bits prédéterminé ;
comparer dans un premier comparateur (621) ladite première adresse virtuelle stockée dans ledit registre d'adresse virtuelle fixée (611) avec ledit deuxième nombre de bits prédéterminé de ladite adresse virtuelle et indiquer une correspondance ;
comparer dans une pluralité de deuxièmes comparateurs (623, 625, 627) chacune desdites deuxièmes adresses virtuelles stockées dans la pluralité de registres d'adresses virtuelles inscriptibles (613, 615, 617) avec ledit deuxième nombre de bits prédéterminé de ladite adresse virtuelle et indiquer une correspondance ;
stocker une première adresse physique qui est fixée au moment de la fabrication dans un registre d'adresse physique fixée (641) ;
stocker une pluralité de deuxièmes adresses physiques dans chacun d'une pluralité de registres d'adresses physiques inscriptibles (643, 647) dudit deuxième nombre de bits prédéterminé ;
en réponse à une correspondance indiquée dans l'un des comparateurs (621, 623, 625, 627), remplacer le contenu d'un registre physique (641, 643, 647) correspondant audit comparateur correspondant (621, 623, 625, 627) par les bits de poids fort de ladite adresse virtuelle de manière à former une adresse physique ;
fournir l'adresse physique formée à ladite mémoire (135) pour un accès mémoire.
